# EUROPEAN PATENT SPECIFICATION

(11) **EP 1 627 561 B1**
(45) Date of publication and mention of the grant of the patent: **21.11.2007**
(21) Application number: 04729372.5
(22) Date of filing: 24.04.2004
(51) Int. Cl.: A01D 46/26

(54) **FORCE-BALANCING OR -MULTIPLYING DEVICE WHICH IS INTENDED FOR A PORTABLE MECHANICAL BEATER/COLLECTOR**
KRAFTAUSGLEICH- ODER VERSTÄRKUNGSVORRICHTUNG FÜR EINEN TRAGBAREN MECHANISCHEN KLOPFER/ERNTER
DISPOSITIF PERMETTANT D'EQUILIBRER OU DE MULTIPLIER DES FORCES, DESTINE A ETRE UTILISE AVEC UN APPAREIL DE GAULAGE ET DE RAMASSAGE MECANIQUE PORTABLE

(30) Priority: 25.04.2003 ES 200300965
(43) Date of publication of application: 22.02.2006
(73) Proprietor: Gurri Molins, Josep, 08140 Caldes de Montbui (Barcelona) (ES)
(72) Inventor: Gurri Molins, Josep, 08140 Caldes de Montbui (Barcelona) (ES)
(74) Representative: Gislon, Gabriele
(86) International application number: PCT/ES2004/000176
(87) International publication number: WO 2004/095908

(56) References cited:
- ES-A- 8 406 144
- ES-A1- 2 195 729
- ES-U- 1 015 565

## Description

### Field of the invention

This invention relates to a device for balancing or multiplying forces in an apparatus fitted with a rod terminated with an operation member that is driven and guided to perform a linear reciprocating vibratory movement. The device of this invention is particularly, although not exclusively, applicable to a portable mechanical shaking harvester designed for the collection of fruit from trees, such as olives and almonds.

### Background techniques

In a generic manner, this type of apparatus comprises a support structure, such as a chassis, casing or box, to which a motor or power takeoff is attached, which is connected by means of a centrifuge clutch to a vibration-generating mechanism adapted to convert the rotating movement into an reciprocating linear vibrating movement. To the output of said vibration-generating mechanism a rod is connected, said rod being fitted with at least one portion linearly guided with respect to said support structure, and an operation member is fixed to a free distal end of said rod.

In the specific case of shaking apparatus for agricultural use, the cited operation member comprises a hook adapted to be fixed to a branch or secondary trunk of a tree or bush in order to transmit to it the vibratory movement generated by the apparatus and thereby forcing the loosening of the fruit attached to said branch or secondary trunk. In the art of that field, several portable mechanical shaking harvesters of the previously described type are known, such as for example those described in documents FR-A-2305927, US-A-3924390 and ES-A-1000253. In this type of machine in general, the motor is a two-stroke petrol engine and, following the clutch a reduction device, whether operated by gears, belts or a combination of the same, is connected. The generating mechanism usually comprises a connecting rod and crank or crankshaft mechanism. At the end of the chassis or box remote from the engine there is a linear guiding device for the cited guided portion of the rod and the rod presents a long cantilever section up to the hook. The rod may consist of two or more portions connected together by means of safety connecting accessories.

In the described types of apparatus, there is a close relationship between the weight, or more specifically the mass, of the machine and the force transmitted by the rod to the branch in each stroke of the vibratory movement for a given engine torque or power. This is due to the fact that the activation force generated by the engine as well as the stroke movement of the generating mechanism are distributed by virtue of the reaction and inertia forces between the machine assembly connected to the chassis and the rod assembly gripping the branch as a function of their respective masses. In other words, the greater the machine mass in relation to the combined rod and branch mass, a greater part of the total force and the total stroke are transmitted to the rod and hence, to the branch. However, since an apparatus with a large mass is tiring to handle by the operator, maximum apparatus lightness is often sought in spite of obtaining a worse performance and a greater transmission of vibration to the operator.

International patent application WO 03/005801 to the present applicant describes a shaking harvester that includes a force balancing and multiplying device applicable to a portable mechanical shaking harvester of the type described above intended to reduce the vibration experienced by the machine and eventually to increase the work performed by the rod. As is conventional, such an apparatus comprises a vibration-generating mechanism connected to a linearly guided rod that converts the rotating movement of the engine into a linear reciprocating movement of the rod. The device comprises a displacer driven by said engine that moves a mass in a reciprocating trajectory opposite in the space and simultaneous in time to the rod trajectory. The value of said mass and the value of its reciprocating stroke are selected in combination in order to create an opposite inertia force capable of balancing and even exceeding the inertia force produced by the rod. The cited document describes several exemplary embodiments in all of which the trajectories of the mass centre of the rod and the mass centre of said mass are parallel.

Although the disposition of the mentioned mass driven to be moved in a reciprocating manner simultaneously with the rod has demonstrated surprising good results with respect to increased performance and reduction of vibration transmitted to the operator, it also arises a new, undesired effect consisting of a tendency of the apparatus to oscillate in a plane comprising both trajectories of the rod and mass. This oscillation is due to the torques generated by the inertia forces of the rod and the mass in opposite parallel directions spaced apart at a certain distance. In referred patent application WO 03/005801 mention is made to the convenience of the rod and mass trajectories being as close as possible. However, it does not describe nor suggest any exemplary embodiment with aligned trajectories, but only an approximation shown in Fig. 5A wherein the mass, which is guided in a trajectory separate to trajectory of the rod has a U-shaped transverse section profile, the arms of which partially surround a zone of the rod in order to displace the mass centre of the mass towards the rod trajectory. This solution can reduce, to a certain extent, the above mentioned oscillation problem, but does not substantially eliminate it.

An object of the present invention is to provide a solution to the previously mentioned oscillation problems associated with the balancing system of the previous art by incorporating a device to balance or multiply forces, applicable to a portable mechanical shaking harvester, which includes a mass that is driven to effect a movement opposite to that of the rod and where the mass movement trajectory is aligned to the rod movement trajectory.

### Description of the invention

The previous and other objects are reached, in accordance with this invention, providing a force balancing or multiplying device, particularly applicable, although not exclusively, to a portable mechanical shaking harvester. The device comprises a support structure, such as a chassis, casing or box, to which a motor or power takeoff is attached and a rod terminated in an operation member and fitted with at least one portion that is linearly guided with respect to the support structure in a first guide. A first vibration-generating mechanism is arranged to convert a rotating movement from said engine into a vibrating linear reciprocating movement of the mentioned rod. A second vibration-generating mechanism is coordinated with said first vibration-generating mechanism in order to convert a rotating movement from said engine into a vibrating linear reciprocating movement of a mass linearly guided with respect to the support structure by a second guide parallel to said first guide, a reciprocating trajectory of the mass centre of the mass that being substantially opposite in space and simultaneous in time to a reciprocating trajectory of the mass centre of the set of elements coupled to the rod and provided with a reciprocating movement in relation to the support structure. The device of this invention is characterised in that said mass has a tubular configuration and has at least one outer surface portion that is guided with respect to the support structure by said second guide, and a longitudinal pass-through aperture into which the rod is installed, with said longitudinal pass-through aperture of the mass forming said first guide for the rod. With this, the cited reciprocating trajectory of the mass centre of the mass is substantially aligned with said reciprocating trajectory of the mass centre of the set of elements coupled to the rod and provided with reciprocating movement.

With this arrangement, the torques generated by the inertia forces of the rod and mass in opposite directions are virtually eliminated, since both trajectories are aligned and consequently, there is no separation distance between both forces normal to the directions thereof. In the same way as in the previous art apparatus, the value of the mass and the amplitude of its reciprocating trajectory are selected in combination in order to create a counter inertia force that is able to totally or partially balance the force of inertia produced by the mass of the cited set of elements coupled to the rod, with a significant increase in performance, together with a reduction in vibration transmitted to the operator. Eventually, the value of said mass and the amplitude of its reciprocating trajectory can be selected in order to create a counter inertia force greater than the inertia force produced by the mass of the cited set of elements coupled to the rod, thus producing an active force component that is added to the active force provided by the engine to the rod, and increasing the amplitude of rod movement with respect to the stroke of the first vibration-generating mechanism.

Advantageously, both the first vibration-generating mechanism and the second vibration-generating mechanism comprise the associated connecting rod and crank mechanisms, where the head of the first mechanism connecting rod is pivotably connected to the rod and the second mechanism connecting rod is pivotably connected to a proximal end of the tubular mass. In one exemplary embodiment, the cranks of the first and second mechanisms are arranged mutually adjacent to form a double crankshaft, with one end connected to a shaft driven by the engine and the other end to a journal shaft coaxial to said driven shaft. Both the driven shaft and journal shaft are guided to rotate with respect to the support structure about a rotating axis that is transversal to the rod and mass reciprocating movements. One output shaft of a centrifugal clutch mechanism associated with the engine terminates in a conical pinion that is geared to a toothed crown that is joined to the crankshaft.

### Brief description of the drawings

The previous and other characteristics and advantages will be more easily understood from the following detailed description of an exemplary embodiment with reference to the accompanying drawings, in which:
Fig. 1 is a partially sectioned side elevation view of a portable mechanical shaking harvester to which the force balancing or multiplying device is applied in accordance with this invention; and
Fig. 2 is an enlarged partial side elevation view in cross section of the force balancing or multiplying device of Fig. 1.

### Detailed description of an exemplary embodiment

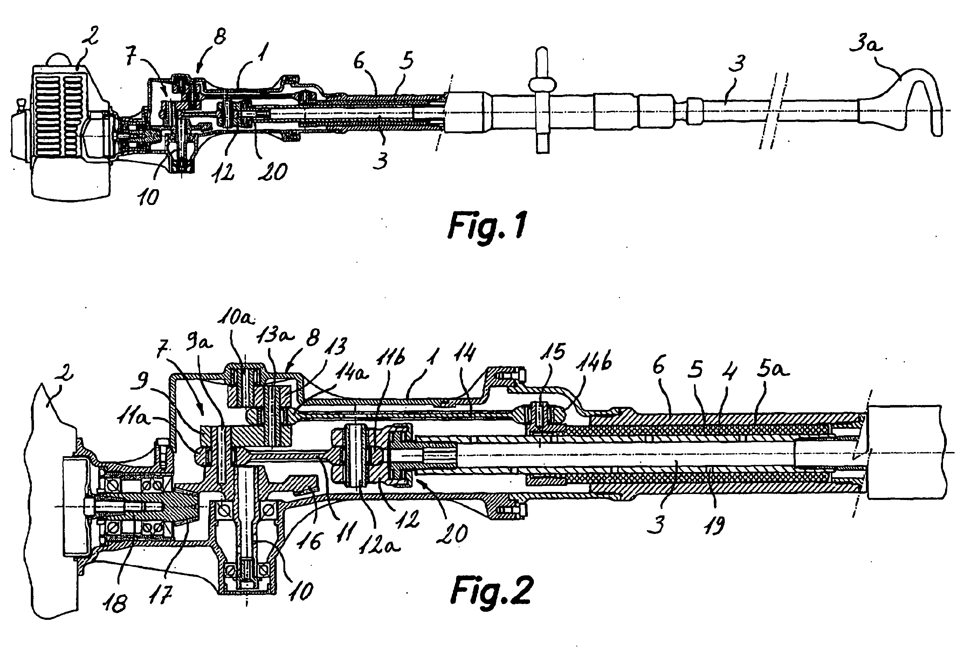

First referring to Fig. 1, the device to balance or multiply forces in accordance with this invention is shown being applied to a portable mechanical shaking harvester of the type comprising a support structure 1, comprising a chassis, casing or box, with an engine 2 at one end. A rod 3 protrudes from the opposite end of the support structure 1, said rod 3 terminating in an operation member 3a, such as a hook that is intended to grip a tree branch or secondary trunk.

As better shown in Fig. 2, the rod 3 has a portion that is linearly guided with respect to the support structure 1 by a first guide 4 and is connected to a first vibration-generating mechanism 7 arranged to convert a rotating movement of said engine 2 into a linear vibratory reciprocating movement of the rod 3. A mass 5 is arranged around a part of said guided portion of the rod 3, the mass 5 having an outer surface portion 5a linearly guided with respect to the support structure 1. by a second guide 6, which is aligned with said first guide 4. A second vibration-generating mechanism 8, coordinated with said first vibration-generating mechanism 5, is set up to convert the rotation movement of the engine 2 in a linear vibratory reciprocating movement of the mass 5. The mentioned second guide 6 comprises a tubular piece secured to the support structure 1 and the mass 5 also has a tubular configuration with a longitudinal pass-through aperture in which the rod 3 is installed and which acts as the first guide 4 for the rod 3.

In this way, the rod 3 and mass 5 are coaxial, and thus the reciprocating trajectory of the mass centre of the mass 5 is substantially aligned with the reciprocating trajectory of the mass centre of the rod 3, including the set of elements coupled to the rod 3, such as the cited hook 3a. Additionally, as is already known, the first and second vibration-generating mechanisms 7 and 8 are arranged to respectively provide the rod 3 and mass 5 with reciprocating trajectories in opposite directions in space and simultaneously in time. The inertia forces generated by the movements of rod 3 and mass 5 in opposite directions do not produce any torque because there is no normal separating distance between them and hence, the problems associated with such torques existing in current previous art devices are substantially eliminated.

The first vibration-generating mechanism 7 comprises a first crank 9 joined to a shaft 10 driven by the engine 2 and a first connecting rod 11 that has a foot 11 a pivotably connected to a first crankpin 9a of said first crank 9 and a head 11 b pivotably connected to a pin 12a of a coupling 12 that is coupled to a proximal end of the rod 3, while the second vibration-generating mechanism 8 comprises a second crank 13 joined to said shaft 10 driven by the engine 2 and a second connecting rod 14 that has a foot 14a pivotably connected to a second crankpin 13a of said second crank 13 and a head 14b pivotably connected to a third pin 15 joined to a proximal end of the mass 5. Advantageously, said first and second cranks 9, 13 are arranged mutually adjacent to form a double crankshaft that includes a journal shaft 10a that is coaxial with the shaft 10 on the side opposite to shaft 10. Both the shaft 10 and the journal shaft 10a are guided to rotate with respect to the support structure 1 about a rotating axis that is transversal to the rod 3 and mass 5 reciprocating movements. Shaft 10 is joined to a conical toothed crown 16 driven by a conical pinion 17 joined to an output shaft 18 of engine 2 or of a centrifugal clutch mechanism associated with engine 2. Obviously, if the apparatus is fitted with a power takeoff (not shown) this would be employed in place of the engine.

Although in the illustrated exemplary embodiment, connecting rod and crank mechanisms are used to generate the vibratory reciprocating movements, this invention is not limited to the same and any mechanism for converting the rotation movement into a linear reciprocating vibratory movement known in the previous art could be incorporated, with both mechanisms being of the same or different types. The movement transmission by conical gears could also be replaced by any other known means of transmission with equivalent results.

Continuing with the exemplary embodiment shown in the figures, the rod 3 is slidably mounted in the pass-through longitudinal aperture of the mass 5 which forms the first guide 4 and said outer surface portion 5a of the mass 5 is slidably mounted in the second guide 6. In order to facilitate a good level of sliding and to reduce the effects of wear and heating, the mass 5 is made of a material with a low coefficient of heating, such as a plastic material eventually with charges to increase its density. Alternatively, mass 5 could be made of a material with suitable density where at least the exterior surface 5a and the longitudinal pass-through aperture of the mass 5 are covered, for example, with a film of low friction coefficient or include a surface treatment intended to provide a greater hardness and a lower friction coefficient than the surface material.

Advantageously, the support structure 1 defines a sealed box containing oil or grease for lubricating the vibration-generating mechanisms 7, 8 and the guidance for rod 3 and mass 5. The device could include configurations to encourage the formation of a lubricating oil film between the first guide 4 defined by the mass 5 and the guided portion of the rod 3, for example, orifices 19 in the wall of the guided portion of rod 3 or spiral channels (not shown) or similar in the interior wall of the pass-through orifice in the mass 5. As is usual, rod 3 can comprise several sections joined together by some suitable means and the various sections could have different characteristics and properties in function of their individual requirements and demands.

In the illustrated exemplary embodiment, both the guided portion of rod 3 and the outer surface portion 5a of the mass 5 are cylindrical and the respective first and second guides 4 and 6 are similarly cylindrical, so that they no longer exercise any restrictions on the free rotation of the rod 3 and the mass 5 about its longitudinal axis. In order to prevent a rotation of the rod 3 caused by, for example, the action of hook 3a on a tree branch or secondary trunk, to be transmitted to the first connecting rod 11 in the form of a detrimental torque, said coupling 12 includes a device 20 to facilitate free rotation of the rod 3 about a longitudinal axis of the same which, at the same time, transmits thrust and traction forces in the direction of the trajectory of the cited linear vibratory movement of the rod 3. The cited device 20 is conventional and is described, for example, in document ES-A-1052281, for which reason its description is omitted here.

The amplitudes of the reciprocating trajectories of the rod 3 and mass 5, in other words, their strokes do not have to be equal. In general, the rod stroke is selected in function of the application, for example, the type of fruit that the apparatus is to harvest, and the value of mass 5 and the amplitude of its stroke are selected in combination to create an opposite force of inertia that is capable of completely or partially balancing the force of inertia produced by the mass of the rod 3 and cited set of elements coupled to the rod 3. Optionally, the value of said mass 5 and the amplitude of its stroke can be selected in combination to create an opposite inertia force that is greater than that produced by the mass of the cited set of rod 3 and coupled elements, thus producing an active force component that is added to the active force provided by the engine 2 to the rod 3, and increasing the movement amplitude of rod 3 with respect to the stroke of the first vibration-generating mechanism 7.

The previous exemplary embodiment is merely for illustrative purposes and does not limit the scope of this invention, which is defined by the attached claims.

## Claims

1. A device for balancing or multiplying forces, applicable to a portable mechanical shaking harveste, of the type comprising:
a support structure (1), selected from a group comprising a chassis, casing or box;
an engine (2) or power takeoff attached to said support structure (1);
a rod (3) terminating with an operation member (3a), said rod (3) being provided with at least one portion that is linearly guided with respect to the support structure (1) in a first guide(4);
a mass (5) that is linearly guided with respect to the support structure (1) by a second guide (6) parallel to said first guide (4);
a first vibration-generating mechanism (7) to convert a rotating movement from said engine (2) into a vibrating linear reciprocating movement of the rod (3);
a second vibration-generating mechanism (8), coordinated with said first vibration-generating mechanism (5) to convert the rotation movement of said engine (2) into a linear vibratory reciprocating movement of the mass (5),
a reciprocating trajectory of the mass centre of the mass (5) being substantially opposite in space and simultaneous in time to a reciprocating trajectory of the mass centre of the set of elements coupled to the rod (3) having a reciprocating movement in relation to the support structure (1), **characterised in that** said mass (5) has a tubular configuration and has at least one outer surface portion (5a) that is guided with respect to the support structure (1) by said second guide (6), and a longitudinal pass-through aperture inside of which the rod (3) is installed, said longitudinal pass-through aperture of the mass (5) constituting the cited first guide (4) for the rod (3), wherein the cited reciprocating trajectory of the mass centre of the mass (5) is substantially aligned with said reciprocating trajectory of the mass centre of the set of elements coupled to the rod (3) having reciprocating movement.

2. A device in accordance with claim 1, **characterised in that** the first vibration-generating mechanism (7) comprises a first crank (9) joined to a shaft (10) driven by the engine (2) and a first connecting rod (11) that has a foot (11a) pivotably connected to a first crankpin (9a) of said first crank (9) and a head (11b) pivotably connected to a pin (12a) of a coupling (12) that is coupled to a proximal end of the rod (3).

3. A device in accordance with claim 2, **characterised in that** the second vibration-generating mechanism (8) comprises a second crank (13) joined to a shaft (10) driven by the engine (2) and a second connecting rod (14) that has a foot (14a) pivotably connected to a second crankpin (13a) of said second crank (13) and a head (14b) pivotably connected to a third pin (15) that is coupled to a proximal end of the mass (5).

4. A device in accordance with claim 2, **characterised in that** said first and second cranks (9, 13) are disposed mutually adjacent forming a double crankshaft.

5. A device in accordance with claim 4, **characterised in that** said double crankshaft includes a journal (10a) that is coaxial with the shaft (10) on the side opposite to the shaft (10), said journal (10a) and shaft (10) being guided so that they rotate with respect to the support structure (1) about a rotating axis that is transversal to the reciprocating movements of the rod (3) and the mass (5).

6. A device in accordance with claim 5, **characterised in that** said shaft (10) is joined to a conical toothed crown (16) that is driven by a conical pinion (17), said conical pinion (17) being joined to an output shaft (18) of the engine (2) or power takeoff, or centrifugal clutch mechanism associated with the engine (2).

7. A device in accordance with claim 1, **characterised in that** said rod (3) is slidably mounted in the pass-through longitudinal aperture of the mass (5) which forms the first guide (4) and said outer surface portion (5a) of the mass (5) is slidably mounted in the second guide (6).

8. A device in accordance with claim 7, **characterised in that** said mass (5) is a high-density material with a low friction coefficient.

9. A device in accordance with claim 7, **characterised in that** at least said outer surface portion (5a) and said pass-through longitudinal aperture of the mass (5) are covered with material having a low friction coefficient.

10. A device in accordance with claim 7, **characterised in that** at least the surface material of said outer surface portion (5a) and said pass-through longitudinal aperture of the mass (5) have a high hardness and a low friction coefficient provided by surface treatment.

11. A device in accordance with claim 2, **characterised in that** said coupling (12) includes a device (20) to facilitate free rotation of the rod (3) about a longitudinal axis of the same at the same time that transmits thrust and traction forces in the direction of the trajectory of the cited linear vibratory movement of the rod (3).

12. A device in accordance with claim 1, **characterised in that** the value of said mass (5) and the amplitude of its reciprocating trajectory are selected in combination in order to create a counter inertia force that is able to totally or partially balance the inertia force produced by the mass of the cited set of elements coupled to the rod (3).

13. A device in accordance with claim 1, **characterised in that** the value of said mass (5) and the amplitude of its reciprocating trajectory are selected in combination to create an opposite inertia force that is greater than the inertia force produced by the mass of the cited set of elements coupled to the rod (3), thus producing an active force component that is added to the active force provided by the engine (2) to the rod (3), and increasing the amplitude of the movement of the rod (3) with respect to the stroke of the first vibration-generating mechanism (7).

## Patentansprüche

1. Kraftausgleichs- und vervielfachungsvorrichtung, die auf eine tragbare mechanische Schüttelerntemaschine anwendbar ist, mit:
einem Grundaufbau (1), ausgewählt aus der Gruppe bestehend aus Fahrgestell, Ummantelung oder Gehäuse;
einem Motor (2) oder Abtrieb, der am Grundaufbau (1) befestigt ist;
einer Stange (3), die mit einem Betätigungselement (3a) endet, wobei die Stange (3) mit mindestens einem bezüglich des Grundaufbaus (1) in einer ersten Führung (4) linear geführten Bereich versehen ist;
einer Masse (5), die bezüglich des Grundaufbaus (1) in einer zur ersten Führung (4) parallel angeordneten zweiten Führung (6) linear geführt wird;
einem ersten Schüttelbewegungsmechanismus (7) zur Umwandlung einer Drehbewegung des Motors (2) in eine Vor- und Rücklauflängsschüttelbewegung der Stange (3);
einem zweiten, mit dem ersten Schüttelbevvegungsmechanismus (5) koordinierten Schüttelbewegungsmechanismus (8) zur Umwandlung der Drehbewegung des Motors (2) in eine Vor- und Rücklauflängsschüttelbewegung der Masse (5),
wobei der Vor- und Rücklaufweg des Schwerpunkts der Masse (5) zum Vor- und Rücklaufweg des Schwerpunkts des Satzes von Elementen, der mit der bezüglich des Grundaufbaus (1) eine Vor- und Rücklaufbewegung ausführenden Stange (3) gekoppelt ist, im wesentlichen räumlich entgegengesetzt und zeitlich gleichzeitig ist, **dadurch gekennzeichnet, dass** die Masse (5) einen rohrförmigen Aufbau, zumindest einen Außenoberflächenbereich (5a), der bezüglich des Grundaufbaus (1) durch die zweite Führung (6) geführt wird, und eine Durchgangsöffnung (3) aufweist, in der die Stange (3) installiert ist, wobei die Längsdurchgangsöffnung der Masse (5) die genannte erste Führung (4) für die Stange (3) darstellt, bei der der genannte Vor- und Rücklaufweg des Schwerpunkts der Masse (5) im wesentlichen bündig ist mit dem Vor- und Rücklaufweg des Schwerpunkts des Satzes von Elementen, der mit der eine Vor- und Rücklaufbewegung ausführenden Stange (3) gekoppelt ist.

2. Vorrichtung nach Anspruch 1, **dadurch gekennzeichnet, dass** der erste Schüttelbewegungsmechanismus (7) eine erste Handkurbel (9), die mit einer Welle (10) verbunden ist, die durch den Motor (2) angetrieben wird, eine erste Pleuelstange (11) mit einem Fuß (11a), der schwenkbar mit einem ersten Kurbelzapfen (9a) der ersten Handkurbel (9) verbunden ist, und einen Kopf (11 b) aufweist, der schwenkbar mit einem Bolzen (12a) einer Kupplung (12) verbunden ist, die mit einem nahen Ende der Stange (3) gekoppelt ist.

3. Vorrichtung nach Anspruch 2, **dadurch gekennzeichnet, dass** der zweite Schüttelbewegungsmechanismus (8) eine zweite Handkurbel (13), die mit einer Welle (10) verbunden ist, die durch den Motor (2) angetrieben wird, eine zweite Pleuelstange (14) mit einem Fuß (14a), der schwenkbar mit einem zweiten Kurbelzapfen (13a) der zweiten Handkurbel (13) verbunden ist, und einen Kopf (14b) aufweist, der schwenkbar mit einem dritten Bolzen (15) verbunden ist, der mit einem nahen Ende der Masse (5) gekoppelt ist.

4. Vorrichtung nach Anspruch 2, **dadurch gekennzeichnet, dass** die erste und zweite Handkurbel (9, 13) unter Bildung einer Doppelkurbelwelle zueinander benachbart angeordnet sind.

5. Vorrichtung nach Anspruch 4, **dadurch gekennzeichnet, dass** die Doppelkurbelwelle einen zur Welle (10) auf der der Welle (10) gegenüber liegenden Seite koaxialen Kurbelzapfen (10a) aufweist, wobei der Kurbelzapfen (10a) und die Welle (10) so geführt werden, dass sie sich bezüglich des Grundaufbaus (1) um eine Drehachse drehen, die quer zu den Vor- und Rücklaufbewegungen der Stange (3) und der Masse (5) angeordnet ist.

6. Vorrichtung nach Anspruch 5, **dadurch gekennzeichnet, dass** die Welle (10) mit einem konischen Steigzahnrad (16) verbunden ist, das von einem zweiten konischen Ritzel (17) angetrieben ist, wobei das konische Ritzel (17) mit einer Ausgangswelle (18) des Motors (2) bzw. Abtriebs bzw. mit einem mit dem Motor (2) in Verbindung stehenden Zentrifugalkupplungsmechanismus verbunden ist.

7. Vorrichtung nach Anspruch 1, **dadurch gekennzeichnet, dass** die Stange (3) in der die erste Führung (4) bildenden Längsdurchgangsöffnung der Masse (5) gleitend installiert ist und der Außenoberflächenabschnitt (5a) der Masse (5) in der zweiten Führung (6) gleitend installiert ist.

8. Vorrichtung nach Anspruch 7, **dadurch gekennzeichnet, dass** es sich bei der Masse (5) um ein Material hoher Dichte mit niedrigem Reibungskoeffizienten handelt.

9. Vorrichtung nach Anspruch 7, **dadurch gekennzeichnet, dass** zumindest der Außenoberflächenabschnitt (5a) und die Längsdurchgangsöffnung der Masse (5) mit einem Material mit hohem Reibungskoeffizienten beschichtet sind.

10. Vorrichtung nach Anspruch 7, **dadurch gekennzeichnet, dass** zumindest das Oberflächenmaterial des Außenoberflächenabschnitts (5a) und die Längsdurchgangsöffnung der Masse (5) hohe Härte und einen niedrigen Reibungskoeffizienten besitzen, die durch eine Oberflächenbehandlung erzielt wurden.

11. Vorrichtung nach Anspruch 2, **dadurch gekennzeichnet, dass** die Kupplung (12) eine Vorrichtung (20) aufweist, mit der die freie Drehung der Stange (3) um eine ihrer Längsachsen gleichzeitig mit der Übertragung von Druck- und Zugkräften in Richtung des Laufwegs der genannten Längsschüttelbewegung der Stange (3) erleichtert wird.

12. Vorrichtung nach Anspruch 1, **dadurch gekennzeichnet, dass** der Wert für die Masse (5) und die Amplitude ihres Vor- und Rücklaufwegs zusammen so gewählt werden, dass eine Gegenträgheitskraft erzeugt wird, mit der die durch die Masse des genannten Satzes von mit der Stange (3) gekoppelten Elemente erzeugte Trägheitskraft ganz oder teilweise ausgeglichen werden kann.

13. Vorrichtung nach Anspruch 1, **dadurch gekennzeichnet, dass** der Wert für die Masse (5) und die Amplitude ihres Vor- und Rücklaufwegs zusammen so gewählt werden, dass eine gegenläufige Trägheitskraft erzeugt wird, die größer ist als die durch die Masse des mit der Stange (3) verknüpften Satzes von Elementen verursachte Trägheitskraft, wodurch eine zur vom Motor (2) an die Stange (3) gelieferten wirksamen Kraft addierte wirksame Kraftkomponente entsteht und hierdurch die Amplitude der Bewegung der Stange (3) bezüglich des Wegs des ersten Schüttelbewegungsmechanismus (7) erhöht wird.

## Revendications

1. Dispositif pour équilibrer et multiplier des forces, applicable à une moissonneuse secoueuse mécanique portable du genre comportant:
une structure support (1) choisie d'un groupe comprenant un châssis, bâti ou carter;
un moteur (2) ou une prise de force reliée à cette structure support (1);
une tige (3) finissant en un membre de commande (3a), cette tige (3) étant pourvue d'au moins une portion qui est guidée de façon linéaire par rapport à la structure support (1) dans un premier guide (4);
une masse (5) qui est guidée de façon linéaire par rapport à la structure support (1) par un deuxième guide (6) parallèle à ce premier guide (4);
un premier mécanisme générateur de vibration (7) pour convertir un mouvement de rotation de ce moteur (2) en un mouvement de va-et-vient linéaire vibrant de la tige (3);
un deuxième mécanisme générateur de vibration (8) coordonnée avec ce premier mécanisme générateur de vibration (5) pour convertir le mouvement de rotation de ce moteur (2) en un mouvement de va-et-vient vibrant linéaire de la masse (5),
une trajectoire de va-et-vient du centre de la masse (5) étant sensiblement opposée dans l'espace et simultané dans le temps à une trajectoire de va-et-vient du centre de la masse du jeu d'éléments accouplés à la tige (3) ayant un mouvement de va-et-vient par rapport à la structure support (1) **caractérisé en ce que** cette masse (5) a une configuration tubulaire et elle a au moins une portion de surface extérieure (5a) qui est guidée par rapport à la structure support (1) par ce deuxième guide (6) et une ouverture traversante longitudinale à l'intérieur de laquelle la tige (3) est installée, cette ouverture traversante longitudinale de la masse (5) constituant ledit premier guide (4) de la tige (4) dans lequel ladite trajectoire de va-et-vient du centre de masse de la masse (5) est sensiblement aligné à cette trajectoire de va-et-vient du centre de masse du jeu d'éléments accouplés à la tige (3) ayant un mouvement de va-et-vient.

2. Un dispositif conformément à la revendication 1, **caractérisé en ce que** le premier mécanisme générateur de vibration (7) comporte une première manivelle (9) unie à un arbre (10) entraîné par le moteur (2) et une première bielle (11) ayant un pied (11a) relié pivotant à un premier tourillon (9a) de cette première manivelle (9) et une tête (11 b) reliée pivotante à une broche (12a) d'un accouplement (12) qui est accouplé à une extrémité proximale de la tige (3).

3. Un dispositif conformément à la revendication 2, **caractérisé en ce que** le deuxième mécanisme générateur de vibration (8) comporte une deuxième manivelle (13) unie à un arbre (10) entraîné par le moteur (2) et une deuxième bielle (14) qui a un pied (14a) relié pivotant à un deuxième tourillon (13a) de cette deuxième manivelle (13) et une tête (14b) reliée pivotante à une troisième broche (15) qui est accouplée à une extrémité proximale de la masse (5).

4. Un dispositif conformément à la revendication 2, **caractérisé en ce que** ces première et deuxième manivelles (9,13) sont aménagées adjacentes l'une de l'autres en formant un arbre à manivelle double.

5. Un dispositif conformément à la revendication 4, **caractérisé en ce que** cet arbre à manivelle double comporte une articulation (10a) qui est coaxiale à l'arbre (10) sur le côté opposé à l'arbre (10), cette articulation (10a) et arbre (10) étant guidés de sorte qu'ils tournent par rapport à la structure support (1) autour de l'axe de rotation qui est transversal aux mouvements de va-et-vient de la tige (3) et de la masse (5).

6. Un dispositif conformément à la revendication 5, **caractérisé en ce que** cet arbre (10) est uni à une couronne dentée conique (16) qui est entraînée par un pignon conique (17), ce pignon conique (17) étant uni à un arbre de sortie (18) du moteur (2) ou prise de force ou d'un mécanisme d'embrayage centrifuge relié au moteur (2).

7. Un dispositif conformément à la revendication 1, **caractérisé en ce que** cette tige (3) est montée coulissante dans l'ouverture traversante longitudinale de la masse (5) qui forme le premier guide (4) et cette portion de surface extérieure (5a) de la masse (5) et montée coulissante dans le deuxième guide (6).

8. Un dispositif conformément à la revendication 7, **caractérisé en ce que** cette masse (5) est un matériau à densité élevée ayant un coefficient de friction faible.

9. Un dispositif conformément à la revendication 7, **caractérisé en ce qu'**au moins cette portion de surface extérieure (5a) et cette ouverture traversante longitudinale de la masse (5) sont recouvertes d'un matériau ayant un coefficient de friction faible.

10. Un dispositif conformément à la revendication 7, **caractérisé en ce qu'**au moins le matériau de la surface de cette portion de surface extérieure (5a) et cette ouverture traversante longitudinale de la masse (5) ont une dureté élevée et un coefficient de friction faible fourni par le traitement de surface.

11. Un dispositif conformément à la revendication 2 **caractérisé en ce que** cet accouplement (12) comporte un dispositif (20) pour faciliter la rotation libre de la tige (3) autour d'un axe longitudinal de celui-ci en même temps qu'il transmet les forces de poussée et de traction dans la direction de la trajectoire de ce mouvement linéaire vibrant de la tige (3).

12. Un dispositif conformément à la revendication 1, **caractérisée en ce que** la valeur de cette masse (5) et l'amplitude de sa trajectoire de va-et-vient sont choisie en combinaison afin de créer une force de contre-inertie qui soit capable, d'équilibrer en tout ou partie la force d'inertie produite par la masse de ce jeu d'éléments accouplés à la tige (3).

13. Un dispositif conformément à la revendication 1, **caractérisée en ce que** la valeur de cette masse (5) et l'amplitude de sa trajectoire de va-et-vient sont choisies en combinaison pour créer une force d'inertie opposée que sera plus grande que la force d'inertie produite par la masse de ce jeu d'éléments accouplés à la tige (3), en produisant ainsi un composant de force active qui est ajouté à la force active fournie par le moteur (2) à la tige (3) et en accroissant l'amplitude du mouvement de la tige (3) par rapport à la course du premier mécanisme générateur de vibration (7).
